# EUROPEAN PATENT APPLICATION

(11) **EP 4 415 073 A1**
(43) Date of publication of application: **14.08.2024**
(21) Application number: 23793979.8
(22) Date of filing: 28.08.2023
(51) Int. Cl.: H01M 4/36, H01M 4/505, H01M 4/525, H01M 4/62, H01M 4/131, H01M 10/0525

(54) **LITHIUM-RICH MANGANESE-BASED POSITIVE ELECTRODE MATERIAL, PREPARATION METHOD THEREFOR, AND USE THEREOF**

(30) Priority: 15.12.2022 CN 202211618223
(71) Applicant: Tianjin B&M Science And Technology Co., Ltd., Tianjin 300384 (CN)
(72) Inventor: FU, Pingping, Tianjin 300384 (CN); LI, Honglei, Tianjin 300384 (CN); LV, Fei, Tianjin 300384 (CN); XU, Ning, Tianjin 300384 (CN)
(74) Representative: Meroni, Francesca
(86) International application number: PCT/CN2023/115138
(87) International publication number: WO 2024/124961

(57) **Abstract**

The present disclosure relates to a lithium-rich manganese-based cathode material and a preparation method and use thereof, belonging to the technical field of lithium ion batteries. The lithium-rich manganese-based cathode material provided in the present disclosure includes a cathode material matrix and a coating layer coated on a surface of the cathode material matrix. The coating layer includes a carbon material doped with nitrogen element and sulfur element. The above carbon material doped with nitrogen element and sulfur element includes a carbon material doped with nitrogen element and sulfur element formed by thermal decomposition of an organic matter containing nitrogen element and sulfur element. The above lithium-rich manganese-based cathode material can effectively improve initial efficiency, cycle performance, and rate performance of batteries, and reduce voltage attenuation.

## Description

### Cross-reference to Related Applications

The present disclosure claims priority to the Chinese patent application with the filing No. 202211618223.5, filed with the Chinese Patent Office on December 15, 2022, and entitled "Lithium-rich Manganese-based Cathode Material and Preparation Method and Use thereof", all the contents of which are incorporated herein by reference in entirety.

### Technical Field

The present disclosure relates to the technical field of lithium ion batteries, and particularly to a lithium-rich manganese-based cathode material and a preparation method and use thereof.

### Background Art

At present, layered oxides are widely applied as cathode materials in the field of commercial lithium ion batteries due to high plateau voltage and relatively high specific capacity thereof. However, the conventional cathode materials possessing moderate specific capacity cannot meet endurance mileage requirements of electric vehicles. Therefore, it seems particularly necessary to develop a new generation of high-energy-density cathode materials.

Lithium-rich manganese-based layered cathode material has a high specific capacity exceeding 250 mAh/g and a high working voltage of 4.8 V, and has low cost, thus it attracts researchers' widespread attentions. Having so large specific capacity is because that Li₂MnO₃ component in the layered lithium-rich manganese-based cathode material participates as active phase in reactions at a charging voltage higher than 4.5 V. However, the layered lithium-rich manganese-based cathode material still has the following key problems in practical use: 1) low initial efficiency of initial cycle due to oxygen release and irreversible movement of Li₂O in lattices; 2) poor rate performance due to low electronic conductivity and low ionic conductivity; 3) relatively poor cycle stability; and 4) voltage attenuation occurring during cycle.

### Summary

Based on this, it is necessary to provide a lithium-rich manganese-based cathode material capable of improving initial efficiency, cycle performance, and rate performance of batteries, and reducing voltage attenuation, and a preparation method and use thereof.

The present disclosure provides a lithium-rich manganese-based cathode material, including a cathode material matrix and a coating layer coated on a surface of the cathode material matrix. The coating layer includes a carbon material doped with nitrogen element and sulfur element.

Optionally, the cathode material matrix includes a material of a chemical formula LiₐNiₓCo_{y}Mn_{1-x-y}O₂, where 1.04≤a≤1.24, 0≤x≤0.2, and 0≤y≤0.1.

Optionally, the carbon material doped with nitrogen element and sulfur element includes a carbon material doped with nitrogen element and sulfur element formed by thermal decomposition of an organic matter containing nitrogen element and sulfur element.

Optionally, the organic matter containing nitrogen element and sulfur element includes one or more of L-cysteine and acetylcysteine.

The present disclosure provides a preparation method of the above lithium-rich manganese-based cathode material, including the following steps:
providing a cathode material matrix;
mixing the cathode material matrix and the organic matter containing nitrogen element and sulfur element, to obtain a mixed material; and
performing a first calcination treatment on the mixed material in a protective atmosphere.

Optionally, a mass ratio of the cathode material matrix to the organic matter containing nitrogen element and sulfur element is 100:(0.5~3).

Optionally, an alcohol solvent is further added when mixing the cathode material matrix and the organic matter containing nitrogen element and sulfur element, and the alcohol solvent is removed, to obtain the mixed material.

Optionally, the alcohol solvent includes one or more of ethanol, n-propanol, and isopropanol.

Optionally, removing the alcohol solvent includes the following steps: heating the cathode material matrix, the organic matter containing nitrogen element and sulfur element, and the alcohol solvent while stirring the same, wherein a stirring speed is 300 rpm/min~600 rpm/min, a heating temperature is 80 °C∼100 °C, and a holding time is 15 mins~30 mins.

Optionally, process conditions of the first calcination treatment include: a calcination temperature of 250 °C∼400 °C, and a holding time of 2 h~3 h.

Optionally, the protective atmosphere includes one or more of argon and nitrogen.

Optionally, the preparation method of the cathode material matrix includes the following steps: mixing a precursor and a lithium salt and then performing a second calcination treatment.

Optionally, the precursor includes a material of a chemical formula NiₘCoₙMn_{0.8-m-n}(OH)₂, where 0≤m≤0.2 and 0≤n≤0.1.

Optionally, the lithium salt includes one or more of Li₂CO₃ and LiOH.

Optionally, a molar ratio of metal element in the precursor to lithium element in the lithium salt is 1 :(1.3~1.6).

Optionally, a calcination atmosphere of the second calcination treatment includes one or more of air and oxygen.

Optionally, process conditions of the second calcination treatment include: calcining the precursor and the lithium salt that are mixed at 450 °C∼600 °C for 4 h∼6 h, and then calcining at 850 °C∼1020 °C for 4 h~6 h.

The present disclosure provides a cathode sheet, including the above lithium-rich manganese-based cathode material or the lithium-rich manganese-based cathode material prepared by the above preparation method.

The present disclosure provides a lithium ion battery, including the above cathode sheet.

The present disclosure provides a power consumption device, including the above lithium ion battery.

Compared with the conventional technology, the above lithium-rich manganese-based cathode material and the preparation method and the use thereof at least have the following advantages:
The coating layer of the above lithium-rich manganese-based cathode material contains the carbon material doped with nitrogen element and sulfur element. This material has active sites and defects, thus can improve the electrical conductivity of electrons and the electrical conductivity of ions, and meanwhile can inhibit occurrence of aggregation of the lithium-rich manganese-based cathode material during the cycle, so that the initial efficiency, cycle performance, and rate performance of the lithium-rich manganese-based cathode material can be effectively improved, and the voltage attenuation can be reduced.

### Brief Description of Drawings

FIG. 1 is a comparison diagram of initial charging and discharging performance of lithium-rich manganese-based cathode materials prepared in Examples 1~3 and Comparative Example 1 in the present disclosure under 1C condition.
FIG. 2 is a comparison diagram of cycle performance of the lithium-rich manganese-based cathode materials prepared in Examples 1∼3 and Comparative Example 1 in the present disclosure after 200 cycles under 0.5C condition.
FIG. 3 is a comparison diagram of rate performance of the lithium-rich manganese-based cathode materials prepared in Examples 1∼3 and Comparative Example 1 in the present disclosure.

### Detailed Description of Embodiments

In order to make the above objectives, features, and advantages of the present disclosure more apparent and understandable, specific embodiments of the present disclosure are described in detail below. In the following description, many specific details are set forth in order to provide a thorough understanding of the present disclosure. However, the present disclosure can be implemented in many other modes different from those described herein. Those skilled in the art could make similar improvements without departing from the connotation of the present disclosure. Therefore, the present disclosure is not limited by the specific examples disclosed below.

In the description of the present disclosure, unless otherwise defined, professional terms and professional wordings that are not clearly stated have the same meanings as those commonly understood by those skilled in the art, and are general common knowledge of those skilled in the art, and methods that are not clearly stated are conventional methods known to those skilled in the art. The term "multiple (a plurality of)" in the present disclosure means at least two, such as two and three, unless otherwise clearly and specifically defined.

In the present disclosure, for the technical features described in an open manner, a closed technical solution composed of the listed features is included, and an open technical solution containing the listed features is also included.

An embodiment of the present disclosure provides a lithium-rich manganese-based cathode material, including a cathode material matrix and a coating layer coated on a surface of the cathode material matrix. The coating layer includes a carbon material doped with nitrogen element and sulfur element.

In order to solve the problems of low initial efficiency, serious voltage attenuation, poor rate performance, and poor cycle performance of the conventional lithium-rich manganese-based cathode material, technical means such as surface coating, element doping, heterostructure, surface pretreatment, and micro-nano structure can be used. In the above, the surface coating can effectively protect the electrode material, reduce side reactions between the material and an electrolytic solution, and prevent manganese ions from dissolving. Since the carbon material has relatively strong electronic conductivity, using the carbon material as a coating layer of the lithium-rich manganese-based cathode material can effectively improve the electrical conductivity between particles of the material, thereby improving the rate performance of a battery containing this material. However, the single means of carbon coating cannot obviously improve the electrochemical performance of the lithium-rich manganese-based cathode material. Therefore, it is designed in the present disclosure that the coating layer of the lithium-rich manganese-based cathode material contains a carbon material doped with nitrogen element and sulfur element. The above carbon material has active sites and defects as it is doped with nitrogen element and sulfur element. The defects mean that carbon atoms in a carbon ring are substituted with N or S. Thus, redundant electrons can be introduced, which can improve the electrical conductivity of electrons and the electrical conductivity of ions, and meanwhile can inhibit the occurrence of aggregation of the lithium-rich manganese-based cathode material during the cycle, thereby effectively improving the rate performance, the initial efficiency, and the cycle performance of the lithium-rich manganese-based cathode material, and reducing the voltage attenuation.

In some embodiments, the cathode material matrix includes a material of a chemical formula LiₐNiₓCo_{y}Mn_{1-x-y}O₂, where 1.04≤a≤1.24, 0≤x≤0.2, and 0≤y≤0.1. It can be understood that a may be any value from 1.04-1.24, for example: 1.04, 1.08, 1.12, 1.14, 1.18, 1.22, or 1.24, x may be, for example, 0, 0.05, 0.1, 0.15 or 0.2, and y may be, for example, 0, 0.02, 0.04, 0.06, 0.08 or 0.1.

In some embodiments, the carbon material doped with nitrogen element and sulfur element includes a carbon material doped with nitrogen element and sulfur element formed by thermal decomposition of an organic matter containing nitrogen element and sulfur element. The above carbon material obtained from the thermal decomposition of the organic matter containing nitrogen element and sulfur element is coated on the surface of the cathode material matrix. Since the obtained carbon material is doped with nitrogen element and sulfur element, the carbon material has active sites and defects, which can improve the electrical conductivity of electrons and the electrical conductivity of ions, and meanwhile can inhibit occurrence of aggregation of the lithium-rich manganese-based cathode material during the cycle, thereby effectively improving the rate performance, the initial efficiency, and the cycle performance of the lithium-rich manganese-based cathode material, and reducing the voltage attenuation.

In some embodiments, the organic matter containing nitrogen element and sulfur element includes one or more of L-cysteine and acetylcysteine. It should be noted that L-cysteine, also called as L-a-amino-b- mercaptopropionic acid, has a molecular formula C₃H₇NO₂S, a molecular formula of acetylcysteine is C₅H₉NO₃S, and both can generate HS and NH₃ through thermal decomposition, thereby forming the carbon material doped with nitrogen element and sulfur element. Compared with other organic matters containing nitrogen element and sulfur element, L-cysteine and acetylcysteine have better effects in improving the rate performance, the initial efficiency, and the cycle performance of the lithium-rich manganese-based cathode material, and reducing the voltage attenuation. L-cysteine is optionally used.

Another embodiment of the present disclosure provides a preparation method of the above lithium-rich manganese-based cathode material, including the following steps:
providing a cathode material matrix;
mixing the cathode material matrix and an organic matter containing nitrogen element and sulfur element, to obtain a mixed material; and
performing a first calcination treatment on the mixed material in a protective atmosphere.

By performing the first calcination treatment on the above mixed material in the protective atmosphere, a coating layer can be formed on a surface of the cathode material matrix. The above organic matter containing nitrogen element and sulfur element is thermally decomposed in the calcination process to generate HS and NH₃, and form the carbon material doped with nitrogen element and sulfur element, which can modify the surface of the cathode material matrix, improve the electrical conductivity of electrons and the electrical conductivity of ions, and meanwhile can inhibit occurrence of aggregation of the lithium-rich manganese-based cathode material during the cycle. Thus, the rate performance, the initial efficiency, and the cycle performance of the lithium-rich manganese-based cathode material are effectively improved, and the voltage attenuation is reduced. Furthermore, the above preparation method of the lithium-rich manganese-based cathode material is simple in operation, environmentally friendly, non-toxic and non-harmful, and has strong economic adaptability, which is beneficial to industrial applications.

In some embodiments, a mass ratio of the cathode material matrix to the organic matter containing nitrogen element and sulfur element is 100:(0.5~3). It should be noted that, by controlling the mass ratio of the cathode material matrix to the organic matter containing nitrogen element and sulfur element, amass ratio of the cathode material matrix to the carbon material doped with nitrogen element and sulfur element in the coating layer can be controlled. When the mass ratio of the cathode material matrix to the organic matter containing nitrogen element and sulfur element is too low, improvement of the initial efficiency and reduction of the voltage attenuation of the lithium-rich manganese-based cathode material are not obvious. When the mass ratio is too high, since there are many active sites and defects in the carbon material, it is not beneficial to improving the comprehensive performance of the lithium-rich manganese-based cathode material.

It can be understood that, the mass ratio of the cathode material matrix to the organic matter containing nitrogen element and sulfur element may be, for example, 100:0.5, 100:1, 100:1.5, 100:2, 100:2.5, or 100:3.

In some embodiments, an alcohol solvent is further added when mixing the cathode material matrix and the organic matter containing nitrogen element and sulfur element, and the alcohol solvent is removed, to obtain the mixed material. When mixing the above cathode material matrix with the organic matter containing nitrogen element and sulfur element, further adding the alcohol solvent aims at fully mixing the cathode material matrix and the organic matter containing nitrogen element and sulfur element uniformly.

In some embodiments, the alcohol solvent includes one or more of ethanol, n-propanol, and isopropanol.

In some embodiments, removing the alcohol solvent includes the following steps: heating the cathode material matrix, the organic matter containing nitrogen element and sulfur element, and the alcohol solvent while stirring the same, wherein a stirring speed is 300 rpm/min~600 rpm/min, a heating temperature is 80 °C∼100 °C, and holding time is 15 mins~30 mins. It can be understood that the stirring speed may be, for example, 300 rpm/min, 350 rpm/min, 400 rpm/min, 450 rpm/min, 500 rpm/min, 550 rpm/min, or 600 rpm/min, the heating temperature may be any value from 80 ºC∼100 ºC, for example, 80 ºC, 82 ºC, 84 ºC, 86 ºC, 88 ºC, 90 ºC, 92 ºC, 94 ºC, 96 ºC, 98 ºC, or 100 ºC, and the holding time may be, for example, 15 mins, 17 mins, 20 mins, 22 mins, 25 mins, 28 mins, or 30 mins. Heating is optionally oil bath heating.

In some embodiments, process conditions of the first calcination treatment include: a calcination temperature of 250 °C∼400 °C, and holding time of 2 h~3 h. It can be understood that the calcination temperature may be, for example, 250 ºC, 280 ºC, 300 ºC, 320 ºC, 350 ºC, 380 ºC or 400 ºC, and the holding time may be, for example, 2 h, 2.5 h or 3 h.

In some embodiments, process conditions of the first calcination treatment further include: a temperature rising rate of 3 °C/min∼5 °C/min. It can be understood that the temperature rising rate may be any value from 3 ºC/min∼5 ºC/min, such as 3 ºC/min, 3.2 ºC/min, 3.5 ºC/min, 3.8 ºC/min, 4 ºC/min, 4.2 ºC/min, 4.5 ºC/min, 4.8 ºC/min or 5 ºC/min.

In some embodiments, the protective atmosphere includes one or more of argon and nitrogen.

In some embodiments, the preparation method of the cathode material matrix includes the following steps: mixing a precursor and a lithium salt and then performing a second calcination treatment.

In some embodiments, the precursor includes a material of a chemical formula NiₘCoₙMn_{0.8-m-n}(OH)₂, where 0≤m≤0.2 and 0≤n≤0.1. It can be understood that m may be, for example, 0, 0.05, 0.1, 0.15 or 0.2, and n may be, for example, 0, 0.02, 0.04, 0.06, 0.08 or 0.1.

In some embodiments, the lithium salt includes one or more of Li₂CO₃ and LiOH.

In some embodiments, a molar ratio of metal element in the precursor to lithium element in the lithium salt is 1:(1.3∼1.6). It can be understood that the molar ratio of the metal element in the precursor to the lithium element in the lithium salt may be, for example, 1:1.3, 1:1.4, 1:1.5, or 1:1.6.

In some embodiments, a calcination atmosphere of the second calcination treatment includes one or more of air and oxygen.

In some embodiments, process conditions of the second calcination treatment include: calcining the precursor and the lithium salt that are mixed at 450 °C∼600 °C for 4 h∼6 h, and then calcining at 850 °C∼1020 °C for 4 h∼6 h. It can be understood that calcining at 450 °C∼600 °C for 4 h~6 h maybe, for example, calcining at 450 ºC for 6 h, calcining at 500 ºC for 5.5 h, calcining at 550 ºC for 5 h, or calcining at 600 ºC for 4 h, and calcining at 850 °C∼1020 °C for 4 h~6h maybe, for example, calcining at 850 ºC for 6 h, calcining at 900 ºC for 5.5 h, calcining at 950 ºC for 5 h, or calcining at 1020 ºC for 4 h.

Another embodiment of the present disclosure provides a cathode sheet, including the above lithium-rich manganese-based cathode material or the lithium-rich manganese-based cathode material prepared by the above preparation method. It should be noted that, the above cathode sheet may be prepared, for example, by the following method: mixing the above lithium-rich manganese-based cathode material or the lithium-rich manganese-based cathode material prepared by the above preparation method with a conductive agent, and a binder, then adding a solvent and stirring them uniformly to prepare a cathode slurry, coating the cathode slurry on an aluminum foil, and removing the solvent through a drying treatment to obtain the cathode sheet. In the present disclosure, there is no particular limitation to the above conductive agent, the above binder, and the above solvent, and the conductive agents, the binders, and the solvents commonly used in the art can be used.

Another embodiment of the present disclosure provides a lithium ion battery, including the above cathode sheet. It should be noted that the above lithium ion battery may be prepared, for example, by the following method: assembling the above cathode sheet, a separator, and a negative electrode sheet, after being laminated or wound, with a shell, injecting an electrolytic solution into the shell, and then encapsulating the shell to obtain the lithium ion battery. The active substance of the above negative electrode sheet may be, for example, one or more of graphite, hard carbon, silicon material, lithium titanate, and metallic lithium. In the present disclosure, there is no particular limitation to the above separator and the above electrolytic solution, and the separators and the electrolytic solutions commonly used in the art can be used.

Another embodiment of the present disclosure provides a power consumption device, including the above lithium ion battery. It should be noted that the above lithium ion battery can be used as a power supply or an energy storage unit in the above power consumption device. The above power consumption device includes, but is not limited to, an electric vehicle, an intelligent household appliance product, a computer, a tablet, a mobile phone, a digital camera, etc.

The present disclosure is further described in detail below with reference to specific examples and comparative examples. For experimental parameters which are not stated in the following specific examples, reference is preferentially made to guidance given in the document of present disclosure, and reference also can be made to experiment manuals in the art or other experimental methods known in the art, or experiment conditions recommended by manufacturers. It can be understood that instruments and raw materials used in the following examples are relatively specific, and in other specific examples, they are not limited thereto. Weights of relevant components mentioned in the examples of the description of the present disclosure may not only refer to specific contents of various components, but also may indicate a proportional relationship between the weights of various components. Therefore, as long as the contents of relevant components are scaled up or down according to the description of the examples of the present disclosure, they are within the scope disclosed in the examples of the description of the present disclosure. Specifically, the weights in the description of the examples of the present disclosure may be in mass units known in chemistry and chemical engineering fields, such as µg, mg, g, and kg.

In the following examples and comparative examples, a lithium matching amount Li: M(Ni, Co, Mn)=X means that the molar ratio of the lithium element in the lithium salt to the metal element in the precursor is X.

### Example 1

### 1. Preparation of cathode material matrix

A mass of a precursor Ni_{0.2}Co_{0.1}Mn_{0.5}(OH)₂ was 3 g. A mass of a lithium salt Li₂CO₃ was calculated according to a lithium matching amount Li: M(Ni, Co, Mn)=1.5. The weighed precursor Ni_{0.2}Co_{0.1}Mn_{0.5}(OH)₂ and the lithium salt Li₂CO₃ were mixed uniformly in a stirrer, then placed in a tubular furnace, heated to 550 ºC at a temperature rising rate of 3 ºC/min and calcined for 5 h in an air atmosphere, and then heated to 900 ºC at a temperature rising rate of 5 ºC/min and calcined for 12h. After the temperature was lowered to room temperature, the cathode material matrix was obtained. The cathode material matrix included Li_{1.2}Mn_{0.5}Ni_{0.2}Co_{0.1}O₂.

### 2. Preparation of lithium-rich manganese-based cathode material

S1. The obtained cathode material matrix, L-cysteine, and anhydrous ethanol were fully stirred and mixed. Obtained mixed material was heated by an oil bath pan. After the anhydrous ethanol was removed, the mixed material was obtained. In the above, amass of the cathode material matrix was 1 g, a mass ratio of the cathode material matrix to L-cysteine was 100:0.5, a volume of the anhydrous ethanol was 25 mL, a heating temperature was 80 ºC, a stirring time was 15 mins, and a stirring speed was 600 rpm/min.

S2. The mixed material was placed in a tubular furnace, calcined at 350 ºC for 2 h in an argon atmosphere. After the temperature was reduced to room temperature, a lithium-rich manganese-based cathode material surface-modified by an L-cysteine-derived N- and S-doped carbon was obtained, i.e., the coating layer of the lithium-rich manganese-based cathode material included a carbon material doped with nitrogen element and sulfur element formed by thermal decomposition of L-cysteine.

### Example 2

### 1. Preparation of cathode material matrix

A mass of a precursor Ni_{0.2}Co_{0.1}Mn_{0.5}(OH)₂ was 3 g. A mass of a lithium salt Li₂CO₃ was calculated according to a lithium matching amount Li: M(Ni, Co, Mn)=1.5. The weighed precursor Ni_{0.2}Co_{0.1}Mn_{0.5}(OH)₂ and the lithium salt Li₂CO₃ were mixed uniformly in a stirrer, then placed in a tubular furnace, heated to 550 ºC at a temperature rising rate of 3 ºC/min and calcined for 5 h in an air atmosphere, and then heated to 900 ºC at a temperature rising rate of 5 ºC/min and calcined for 12h. After the temperature was lowered to room temperature, the cathode material matrix was obtained. The cathode material matrix included Li_{1.2}Mn_{0.5}Ni_{0.2}Co_{0.1}O₂.

### 2. Preparation of lithium-rich manganese-based cathode material

S1. The obtained cathode material matrix, L-cysteine, and anhydrous ethanol were fully stirred and mixed. Obtained mixed material was heated by an oil bath pan. After the anhydrous ethanol was removed, the mixed material was obtained. In the above, a mass of the cathode material matrix was 1 g, a mass ratio of the cathode material matrix to L-cysteine was 100:1, a volume of the anhydrous ethanol was 25 mL, a heating temperature was 80 ºC, a stirring time was 15 mins, and a stirring speed was 600 rpm/min.

S2. The mixed material was placed in a tubular furnace, calcined at 350 ºC for 2 h in an argon atmosphere. After the temperature was reduced to room temperature, a lithium-rich manganese-based cathode material surface-modified by an L-cysteine-derived N- and S-doped carbon was obtained, i.e., the coating layer of the lithium-rich manganese-based cathode material included a carbon material doped with nitrogen element and sulfur element formed by thermal decomposition of L-cysteine.

### Example 3

### 1. Preparation of cathode material matrix

A mass of a precursor Ni_{0.2}Co_{0.1}Mn_{0.5}(OH)₂ was 3 g. A mass of a lithium salt Li₂CO₃ was calculated according to a lithium matching amount Li: M(Ni, Co, Mn)=1.5. The weighed precursor Ni_{0.2}Co_{0.1}Mn_{0.5}(OH)₂ and the lithium salt Li₂CO₃ were mixed uniformly in a stirrer, then placed in a tubular furnace, heated to 550 ºC at a temperature rising rate of 3 ºC/min and calcined for 5 h in an air atmosphere, and then heated to 900 ºC at a temperature rising rate of 5 ºC/min and calcined for 12h. After the temperature was lowered to room temperature, the cathode material matrix was obtained. The cathode material matrix included Li_{1.2}Mn_{0.5}Ni_{0.2}Co_{0.1}O₂.

### 2. Preparation of lithium-rich manganese-based cathode material

S1. The obtained cathode material matrix, L-cysteine, and anhydrous ethanol were fully stirred and mixed. Obtained mixed material was heated by an oil bath pan. After the anhydrous ethanol was removed, the mixed material was obtained. In the above, a mass of the cathode material matrix was 1 g, a mass ratio of the cathode material matrix to L-cysteine was 100:3, a volume of the anhydrous ethanol was 25 mL, a heating temperature was 80 ºC, a stirring time was 15 mins, and a stirring speed was 600 rpm/min.

S2. The mixed material was placed in a tubular furnace, calcined at 350 ºC for 2 h in an argon atmosphere. After the temperature was reduced to room temperature, a lithium-rich manganese-based cathode material surface-modified by an L-cysteine-derived N- and S-doped carbon was obtained, i.e., the coating layer of the lithium-rich manganese-based cathode material included a carbon material doped with nitrogen element and sulfur element formed by thermal decomposition of L-cysteine.

### Example 4

### 1. Preparation of cathode material matrix

A mass of a precursor Ni_{0.2}Co_{0.1}Mn_{0.5}(OH)₂ was 3 g. A mass of a lithium salt Li₂CO₃ was calculated according to a lithium matching amount Li: M(Ni, Co, Mn)=1.5. The weighed precursor Ni_{0.2}Co_{0.1}Mn_{0.5}(OH)₂ and the lithium salt Li₂CO₃ were mixed uniformly in a stirrer, then placed in a tubular furnace, heated to 550 ºC at a temperature rising rate of 3 ºC/min and calcined for 5 h in an air atmosphere, and then heated to 900 ºC at a temperature rising rate of 5 ºC/min and calcined for 12h. After the temperature was lowered to room temperature, the cathode material matrix was obtained. The cathode material matrix included Li_{1.2}Mn_{0.5}Ni_{0.2}Co_{0.1}O₂.

### 2. Preparation of lithium-rich manganese-based cathode material

S1. The obtained cathode material matrix, L-cysteine, and anhydrous ethanol were fully stirred and mixed. Obtained mixed material was heated by an oil bath pan. After the anhydrous ethanol was removed, the mixed material was obtained. In the above, a mass of the cathode material matrix was 1 g, a mass ratio of the cathode material matrix to L-cysteine was 100:0.2, a volume of the anhydrous ethanol was 25 mL, a heating temperature was 80 ºC, a stirring time was 15 mins, and a stirring speed was 600 rpm/min.

S2. The mixed material was placed in a tubular furnace, calcined at 350 ºC for 2 h in an argon atmosphere. After the temperature was reduced to room temperature, a lithium-rich manganese-based cathode material surface-modified by an L-cysteine-derived N- and S-doped carbon was obtained, i.e., the coating layer of the lithium-rich manganese-based cathode material included a carbon material doped with nitrogen element and sulfur element formed by thermal decomposition of L-cysteine.

### Example 5

### 1. Preparation of cathode material matrix

A mass of a precursor Ni_{0.2}Co_{0.1}Mn_{0.5}(OH)₂ was 3 g. A mass of a lithium salt Li₂CO₃ was calculated according to a lithium matching amount Li: M(Ni, Co, Mn)=1.5. The weighed precursor Ni_{0.2}Co_{0.1}Mn_{0.5}(OH)₂ and the lithium salt Li₂CO₃ were mixed uniformly in a stirrer, then placed in a tubular furnace, heated to 550 ºC at a temperature rising rate of 3 ºC/min and calcined for 5 h in an air atmosphere, and then heated to 900 ºC at a temperature rising rate of 5 ºC/min and calcined for 12h. After the temperature was lowered to room temperature, the cathode material matrix was obtained. The cathode material matrix included Li_{1.2}Mn_{0.5}Ni_{0.2}Co_{0.1}O₂.

### 2. Preparation of lithium-rich manganese-based cathode material

S1. The obtained cathode material matrix, L-cysteine, and anhydrous ethanol were fully stirred and mixed. Obtained mixed material was heated by an oil bath pan. After the anhydrous ethanol was removed, the mixed material was obtained. In the above, a mass of the cathode material matrix was 1 g, a mass ratio of the cathode material matrix to L-cysteine was 100:3.5, a volume of the anhydrous ethanol was 25 mL, a heating temperature was 80 ºC, a stirring time was 15 mins, and a stirring speed was 600 rpm/min.

S2. The mixed material was placed in a tubular furnace, calcined at 350 ºC for 2 h in an argon atmosphere. After the temperature was reduced to room temperature, a lithium-rich manganese-based cathode material surface-modified by an L-cysteine-derived N- and S-doped carbon was obtained, i.e., the coating layer of the lithium-rich manganese-based cathode material included a carbon material doped with nitrogen element and sulfur element formed by thermal decomposition of L-cysteine.

### Comparative Example 1

A preparation method of a lithium-rich manganese-based cathode material is as follows:
A mass of a precursor Ni_{0.2}Co_{0.1}Mn_{0.5}(OH)₂ was 3 g. A mass of a lithium salt Li₂CO₃ was calculated according to a lithium matching amount Li: M(Ni, Co, Mn)=1.5. The weighed precursor Ni_{0.2}Co_{0.1}Mn_{0.5}(OH)₂ and the lithium salt Li₂CO₃ were mixed uniformly in a stirrer, then placed in a tubular furnace, heated to 550 ºC at a temperature rising rate of 3 ºC/min and calcined for 5 h in an air atmosphere, and then heated to 900 ºC at a temperature rising rate of 5 ºC/min and calcined for 12h. After the temperature was lowered to room temperature, a lithium-rich manganese-based cathode material was obtained. The lithium-rich manganese-based cathode material included Li_{1.2}Mn_{0.5}Ni_{0.2}Co_{0.1}O₂.

### Electrochemical performance test

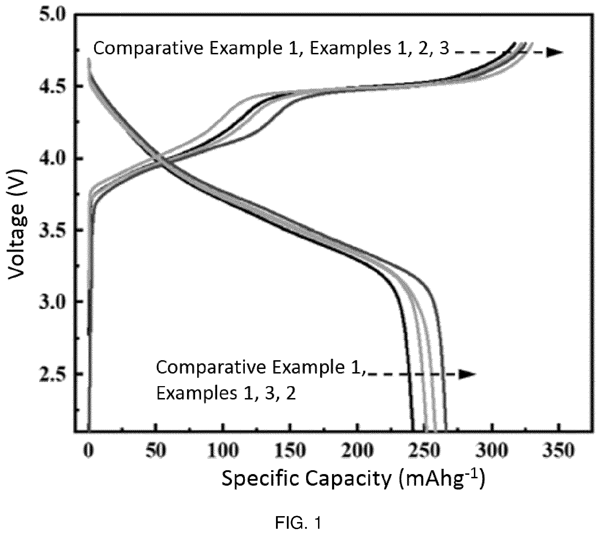

The lithium-rich manganese-based cathode materials prepared in Examples 1∼5 and Comparative Example 1 were made into cathode sheets. The cathode sheets were prepared according to a mass ratio of the lithium-rich manganese-based cathode material: conductive agent: PVDF=90:5:5. The above cathode sheets were assembled into button batteries, and then the batteries were tested for initial charging and discharging specific capacity and initial efficiency under conditions that a voltage was 2.1 V~4.8 V and a current density was 0.05 C (1 C=200 mAhg⁻¹). Discharging specific capacity, capacity retention ratio, and median voltage of the batteries after 200 cycles were tested under a condition that the current density was 0.5 C (1 C = 200 mAhg⁻¹). The median voltage is a voltage value corresponding to a half of discharging specific capacity of a battery. In addition, the button batteries were tested for rate performance, under the following test conditions: charging and discharging the batteries at a constant current at current densities of 0.1 C, 0.2C, 0.5 C, 1 C, 2 C, 5 C, and 0.1 C in sequence, where 1 C=200 mAhg⁻¹, and a voltage was 2.1 V~4.8 V. Test results are as shown in Table 1 and FIGS. 1∼3.

**Table 1**

| Group | Initial Charging Specific Capacity (mAhg⁻¹) | Initial Discharging Specific Capacity (mAhg⁻¹) | Initial Efficiency (%) | 200-cycle Capacity Retention Ratio (%) | 200-cycle Median Voltage Attenuation (V) |
|---|---|---|---|---|---|
| Example 1 | 322.47 | 251.43 | 77.97 | 78.21 | 0.402 |
| Example 2 | 325.21 | 261.63 | 80.45 | 85.74 | 0.306 |
| Example 3 | 330.10 | 257.90 | 78.12 | 82.32 | 0.320 |
| Example 4 | 316.59 | 245.8 | 77.82 | 77.28 | 0.400 |
| Example 5 | 316.15 | 243.5 | 77.02 | 76.56 | 0.413 |
| Comparative Example 1 | 316.62 | 241.30 | 76.21 | 75.40 | 0.425 |

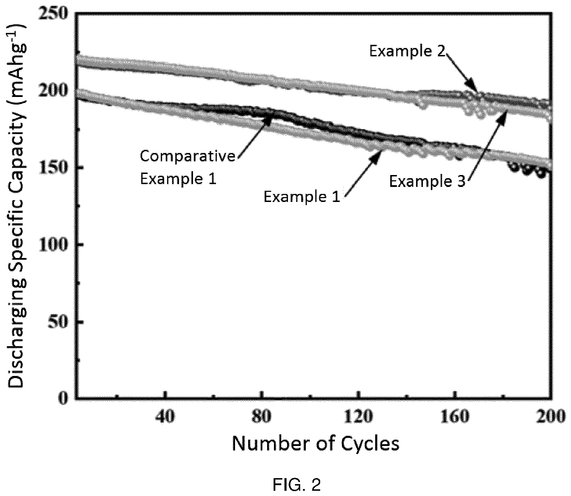

It can be seen from Table 1 and FIGS. 1 and 2 that compared with Comparative Example 1, the initial discharging specific capacity, the initial efficiency, and the 200-cycle capacity retention ratio of the lithium-rich manganese-based cathode materials prepared in Examples 1-5 are significantly higher, and the 200-cycle median voltage attenuation is smaller, indicating that the carbon material doped with nitrogen element and sulfur element in Examples 1∼5 can effectively improve the initial efficiency and the cycle performance of the lithium-rich manganese-based cathode material, and reduce the voltage attenuation. Compared with Examples 4 and 5, the lithium-rich manganese-based cathode materials prepared in Examples 1∼3 have more obvious effect in improving the initial efficiency and the cycle performance and reducing the voltage attenuation.

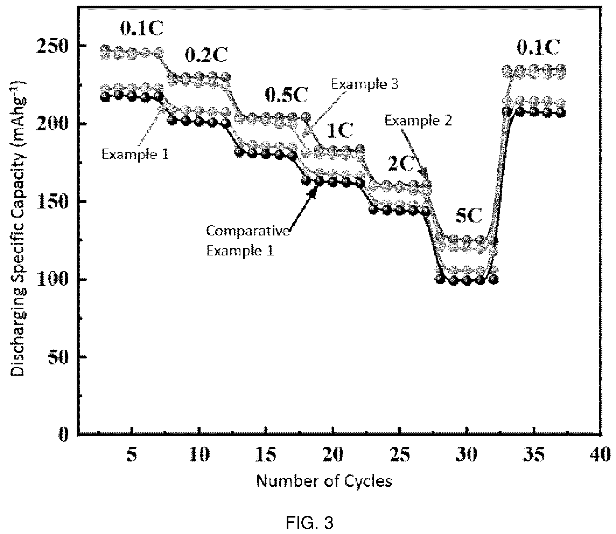

It can be seen from FIG. 3 that compared with Comparative Example 1, the lithium-rich manganese-based cathode materials prepared in Examples 1∼3 have better rate performance. The lithium-rich manganese-based cathode materials prepared in Examples 4 and 5 arealso tested for the above rate performance. The rate performance thereof is better than that in Comparative Example 1, indicating that the carbon material doped with nitrogen element and sulfur element in Examples 1∼5 can effectively improve the rate performance of the lithium-rich manganese-based cathode material.

Various technical features in the above examples can be combined arbitrarily, and for the sake of concise description, not all possible combinations of the various technical features in the above examples are described, while the combinations of these technical features should be considered as within the scope of the present description as long as there is no contradiction.

The above examples merely express several implementation modes of the present disclosure, of which the description is relatively specific and detailed, but should not be thus comprehended as limitation to the patent scope of the present disclosure. It should be noted that those ordinarily skilled in the art still could make several modifications and improvements without departing from the concept of the present disclosure, all of which fall within the scope of protection of the present disclosure. Therefore, the scope of protection of the present patent disclosed should be determined by the enclosed claims. The description and the attached drawings can be used to explain the contents of the claims.

### Industrial Applicability

The lithium-rich manganese-based cathode material provided in the present disclosure includes the cathode material matrix and the coating layer coated on the surface of the cathode material matrix. The coating layer includes the carbon material doped with nitrogen element and sulfur element. The above carbon material doped with nitrogen element and sulfur element includes the carbon material doped with nitrogen element and sulfur element formed by thermal decomposition of an organic matter containing nitrogen element and sulfur element. The lithium-rich manganese-based cathode material provided in the present disclosure can effectively improve the initial efficiency, the cycle performance, and the rate performance of the battery, and reduce the voltage attenuation, thus having excellent industrial applicability.

## Claims

1. A lithium-rich manganese-based cathode material, comprising a cathode material matrix and a coating layer coated on a surface of the cathode material matrix, wherein the coating layer comprises a carbon material doped with nitrogen element and sulfur element.

2. The lithium-rich manganese-based cathode material according to claim 1, wherein the cathode material matrix comprises a material of a chemical formula LiₐNiₓCo_{y}Mn_{0.8-x-y}O₂, where 1.04≤a≤1.24, 0≤x≤0.2, and 0≤y≤0.1.

3. The lithium-rich manganese-based cathode material according to any one of claims 1∼2, wherein the carbon material doped with nitrogen element and sulfur element comprises a carbon material doped with nitrogen element and sulfur element formed by a thermal decomposition of an organic matter containing nitrogen element and sulfur element.

4. The lithium-rich manganese-based cathode material according to claim 3, wherein the organic matter containing nitrogen element and sulfur element comprises one or more of L-cysteine and acetylcysteine.

5. A preparation method of the lithium-rich manganese-based cathode material according to any one of claims 1∼4, comprising following steps:
providing the cathode material matrix;
mixing the cathode material matrix and the organic matter containing nitrogen element and sulfur element, to obtain a mixed material; and
performing a first calcination treatment on the mixed material in a protective atmosphere.

6. The preparation method according to claim 5, wherein a mass ratio of the cathode material matrix to the organic matter containing nitrogen element and sulfur element is 100:(0.5~3).

7. The preparation method according to claim 5, wherein an alcohol solvent is further added when mixing the cathode material matrix and the organic matter containing nitrogen element and sulfur element, and the alcohol solvent is removed, to obtain the mixed material.

8. The preparation method according to claim 7, wherein the alcohol solvent comprises one or more of ethanol, n-propanol, and isopropanol.

9. The preparation method according to claim 7, wherein removing the alcohol solvent comprises following steps: heating the cathode material matrix, the organic matter containing nitrogen element and sulfur element, and the alcohol solvent while stirring, wherein a stirring speed is 300 rpm/min~600 rpm/min, a heating temperature is 80 °C∼100 °C, and a holding time is 15 mins~30 mins.

10. The preparation method according to claim 5, wherein process conditions of the first calcination treatment comprise: a calcination temperature of 250 °C∼400 °C, and a holding time of 2 h~3 h.

11. The preparation method according to claim 5, wherein the protective atmosphere comprises one or more of argon and nitrogen.

12. The preparation method according to any one of claims 5~11, wherein a preparation method of the cathode material matrix comprises following steps: mixing a precursor and a lithium salt and then performing a second calcination treatment, wherein at least one of following conditions is satisfied:
the precursor comprises a material of a chemical formula NiₘCoₙMn_{0.8-m-n}(OH)₂, where 0≤m≤0.2 and 0≤n≤0.1;
the lithium salt comprises one or more of Li₂CO₃ and LiOH;
a molar ratio of a metal element in the precursor to a lithium element in the lithium salt is 1:(1.3∼1.6);
a calcination atmosphere of the second calcination treatment comprises one or more of air and oxygen; and
process conditions of the second calcination treatment comprise: calcining the precursor and the lithium salt that are mixed at 450 °C∼600 °C for 4 h∼6 h, and then calcining at 850 °C∼1020 °C for 4 h~6 h.

13. A cathode sheet, comprising the lithium-rich manganese-based cathode material according to any one of claims 1∼4 or the lithium-rich manganese-based cathode material prepared by the preparation method according to any one of claims 5-12.

14. A lithium ion battery, comprising the cathode sheet according to claim 13.

15. A power consumption device, comprising the lithium ion battery according to claim 14.
